Europäisches Patentamt

European Patent Office

Office européen des brevets

(11) Veröffentlichungsnummer: **0 038 905**

**A1**

(12) # EUROPÄISCHE PATENTANMELDUNG

(21) Anmeldenummer: **81100683.2**

(22) Anmeldetag: **30.01.81**

(51) Int. Cl.³: **G 02 F 1/133**
**G 09 F 9/35**

(30) Priorität: **29.04.80 DE 3016396**

(43) Veröffentlichungstag der Anmeldung:
**04.11.81 Patentblatt 81/44**

(84) Benannte Vertragsstaaten:
**CH FR GB IT LI NL**

(71) Anmelder: **VDO Adolf Schindling AG**
**Gräfstrasse 103**
**D-6000 Frankfurt/Main(DE)**

(72) Erfinder: **Perthes, Harald**
**Am Rehsteig 10**
**D-6232 Bad Soden 2(DE)**

(72) Erfinder: **Nickol, Friedrich Wilhelm**
**Am Honigbaum 35**
**D-6239 Eppstein 4(DE)**

(74) Vertreter: **Könekamp, Herbert, Dipl.-Ing. et al,**
**Sodener Strasse 9**
**D-6231 Schwalbach(DE)**

(54) **Passives elektrooptisches Anzeigeelement.**

(57) Bei einem passiven elektrooptischen Anzeigeelement zur Darstellung von Informationen bilden zwei im Abstand zueinander angeordnete Zellengläser (1, 2) eine geschlossene Kammer (3), wobei auf den der Kammer (3) abgewandten Seiten der Zellengläser jeweils Polarisatoren (5, 6) und auf der der Kammer (3) zugewandten Seite der Zellengläser (1, 2) jeweils ein durchsichtiger Elektrodenträger (8, 9) angeordnet ist. Die Kammer (3) ist zwischen den Elektroden mit einer Flüssigkristallsubstanz (14) gefüllt und eines der innerhalb der Kammer (3) angeordneten Bauteile (13; 15, 15', 15") transparentfarbig ausgebildet.

FIG.1

EP 0 038 905 A1

VDO Adolf Schindling AG          - 1 -   6000 Frankfurt/Main
                                         Gräfstraße 103

### Passives elektrooptisches Anzeigeelement

Die Erfindung bezieht sich auf ein passives elektrooptisches Anzeigeelement zur Darstellung von Informationen mit einer zwischen zwei im Abstand zueinander
angeordneten Zellengläsern gebildeten geschlossenen
Kammer, wobei auf den der Kammer abgewandten Seiten
der Zellengläser jeweils Polarisatoren und auf der
der Kammer zugewandten Seite der Zellengläser jeweils ein durchsichtiger Elektrodenträger angeordnet ist sowie die Kammer zwischen den Elektroden mit
einer Flüssigkristallsubstanz gefüllt ist.

Bei derartigen Anzeigeelementen ist es bekannt, den
vom Betrachter aus hinteren Polarisator bzw. die an
ihn angrenzende Fläche des einen Zellenglases farbig
zu gestalten. Dies wird insbesondere dort angewandt,
wo verschiedene Anzeigefelder durch unterschiedliche
Farbgebung gut unterscheidbar gemacht werden sollen.

Bei einer Beobachtung der Anzeigewerte von der Seite
her kann es dazu kommen, daß man als das dem abzulesenden Anzeigewert hinterlegte Farbfeld, das Farbfeld des benachbarten Anzeigewerts sieht und dadurch einen falschen Wert registriert, zumindest aber verunsichert wird.

Es ist daher Aufgabe der Erfindung ein Anzeigeelement der eingangs genannten Art zu schaffen, das ein sicheres und richtiges Ablesen der Anzeigewerte ermöglicht.

Diese Aufgabe wird erfindungsgemäß dadurch gelöst, daß eines der innerhalb der Kammer angeordneten Bauteile transparent farbig ausgebildet ist. Durch diese Merkmale wird ein sicheres und richtiges Ablesen der Anzeigewerte auch ermöglicht, wenn ein Anzeigeelement der eingangs genannten Art mit an der zum Kammerinneren gerichteten Seite der Elektroden angeordneten Orientierungsschichten oder auch noch zusätzlich mit zwischen den Elektroden und den Orientierungsschichten jeweils angeordneten Isolierschichten versehen ist. Durch diese Lösung ist beim Beobachten der Anzeigewerte von der Seite her die Parallaxe zwischen der Ebene, in der die Anzeigewerte dargestellt werden und der Ebene der Farbfelder so gering, daß diese beiden Ebenen für den Beobachter als eine einzige Ebene erscheinen und somit ein Fehlablesen vermieden wird.

Die farbige Ausbildung der in der Kammer angeordneten Bauteile kann dadurch erfolgen, daß eine Farbschicht auf eines der Bauteile aufgebracht ist. Die Farbschicht kann dabei aufgedruckt sein. Dieses Aufdrucken erfolgt dabei in vorteilhafter Weise derart, daß das Bauteil, welches bedruckt werden soll, zuerst auf das Zellenglas bzw. ein bereits auf das Zellenglas aufgebrachtes Bauteil aufgebracht und dann bedruckt wird. Dieses Verfahren ist deshalb vorzuziehen, da die einzelnen Schichten wie Elektrodenträger, Orientierungsschicht und Isolierschicht sehr dünn und damit sehr empfindlich sind und durch das Zellenglas erst eine Stabilität erhalten. Besonders vorteilhaft ist es, die Farbe nach dem Offset-Druckverfahren auf die Bauteile aufzubringen.

Eine weitere Möglichkeit des farbigen Ausbildens der Bauteile besteht darin, daß die Farbschicht eine Farbfolie ist, die möglichst auch erst nach dem Aufbringen des mit ihr versehenen Bauteils direkt oder indirekt auf das Zellenglas auf dem Bauteil angeordnet wird.

Eine weitere Möglichkeit der transparentfarbigen Ausbildung der Bauteile innerhalb der Kammer besteht darin, daß entweder eines der Zellengläser, eine der Orientierungsschichten oder eine der Isolierschichten aus einem farbigen Werkstoff besteht. Die Farbe dieses Werkstoffs kann durch Mischung des Werkstoffs mit einem Farbstoff bei der Herstellung des Bauteils erzielt werden. Der gefärbte Werkstoff der Orientierungsschicht bzw. der Isolierschicht kann dann zum Beispiel mit Druckwalzen auf den Elektrodenträger bzw. auf die bereits auf dem Elektrodenträger befindliche Isolierschicht aufgebracht werden. Damit erfolgt vorteilhafterweise das Aufbringen der Farbe und der Orientierungs- bzw. Isolierschicht in einem Arbeitsgang.

Ausführungsbeispiele der Erfindung sind in der Zeichnung dargestellt. Es zeigen:

Figur 1   ein erstes Ausführungsbeispiel eines
          erfindungsgemäßen Anzeigelements,

Figur 2   ein zweites Ausführungsbeispiel eines
          erfindungsgemäßen Anzeigeelements.

Die in den Figuren dargestellten passiven elektrooptischen Anzeigeelemente weisen eine zwischen zwei im
Abstand zueinander angeordneten Zellengläser 1 und 2
gebildete Kammer 3 auf, die nach der Seite hin durch
eine Seitenwand 4 verschlossen ist.

Auf die äußeren Flächen der Zellengläser 1 und 2 sind
Polarisatoren 5 und 6 aufgebracht, wobei die nach
außen gerichtete Fläche des Polarisators 6 noch einen
Reflektor 7 trägt.

Kammerseitig sind an den Zellengläsern 1 und 2 jeweils
ein durchsichtiger Elektrodenträger 8 und 9, darauf
jeweils eine Isolierschicht 10 und 11 und darauf
wiederum jeweils eine Orientierungsschicht 12 und 13
angeordnet.

Zwischen diesen Schichtpaketen ist die Kammer 3 mit
Flüssigkristallsubstanz 14 gefüllt.

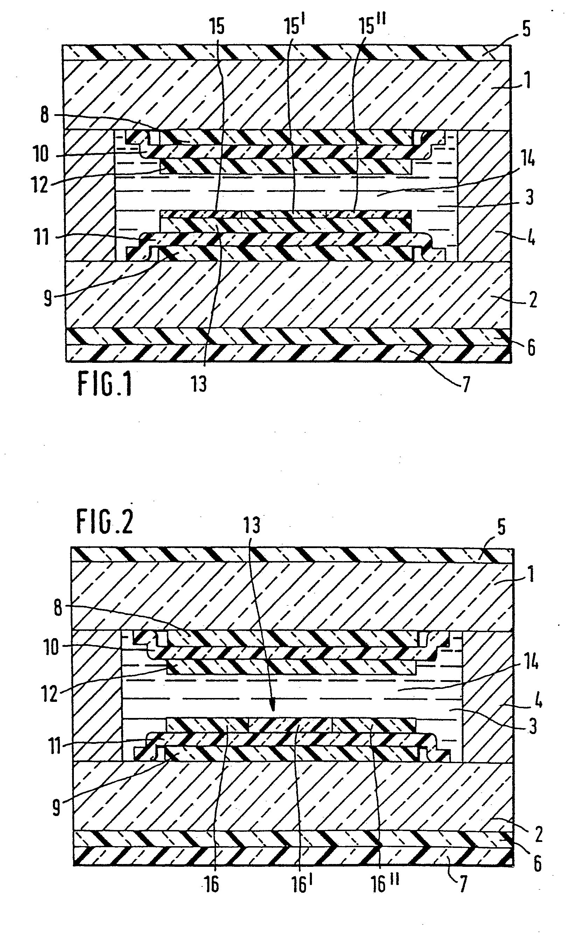

In Figur 1 ist auf der Orientierungsschicht 13 eine
Farbschicht von drei verschiedenen farbigen transparenten Feldern 15, 15' und 15'', zum Beispiel in
rot, grün und blau durch einen Druckvorgang aufgedruckt.

In Figur 2 ist die Orientierungsschicht 13 selbst verschiedenfarbig indem dem Werkstoff der Orientierungsschicht 13 bei dessen Herstellung ein transparenter Farbstoff beigemischt und dann dieser in drei verschiedenen Farben z.B. rot, grün und blau gefärbte Werkstoff durch z.B. Aufwalzen in drei verschiedenen Feldern 16, 16', 16'' auf die Isolierschicht 11 aufgebracht wurde.

Dadurch, daß die durch die Farbfelder 15, 15', 15'' bzw. die Felder 16, 16', 16'' gebildeten farbigen Bereiche sehr nahe zu der Ebene liegen, in der die Informationen dargestellt werden - dies erfolgt in dem mit der Flüssigkristallsubstanz 14 gefüllten Zwischenraum zwischen den beiden Orientierungsschichten 12 und 13 - ist praktisch kein Fehlablesen der Informationen durch den von der Seite des Polarisators 5 her schauenden Beobachter aufgrund einer Parallaxe zwischen den Farbfeldern 15, 15', 15'' bzw. den Feldern 16, 16', 16'' und der durch die Flüssigkristallsubstanz 14 gebildeten Anzeigeebene möglich.

Es ist natürlich auch möglich, daß die Funktionen der verschiedenen Schichten wie Isolationsschicht, Entspiegelungsschicht und Orientierungsschicht von einer einzigen Schicht erfüllt werden, auf die entweder eine Farbschicht auftragbar ist oder deren Werkstoff selbst durch z.B. Beimischen eines Farbstoffs transparentfarbig ist.

Patentansprüche

1. Passives elektrooptisches Anzeigeelement zur Darstellung von Informationen mit einer zwischen zwei im Abstand zueinander angeordneten Zellengläsern gebildeten geschlossenen Kammer, wobei auf den der Kammer abgewandten Seiten der Zellengläser jeweils Polarisatoren und auf der der Kammer zugewandten Seite der Zellengläser jeweils ein durchsichtiger Elektrodenträger angeordnet ist sowie die Kammer zwischen den Elektroden mit einer Flüssigkristallsubstanz gefüllt ist, dadurch gekennzeichnet, daß eines der innerhalb der Kammer (3) angeordneten Bauteile transparentfarbig ausgebildet ist.

2. Passives elektrooptisches Anzeigeelement nach dem Oberbegriff des Anspruches 1 bei dem an der zum Kammerinneren gerichteten Seite der Elektrodenträger Orientierungsschichten angeordnet sind, dadurch gekennzeichnet, daß eines der innerhalb der Kammer (3) angeordneten Bauteile transparentfarbig ausgebildet sind.

3. Passives elektrooptisches Anzeigeelement nach dem Oberbegriff des Anspruchs 2 bei dem zwischen den Elektrodenträgern und den Orientierungsschichten jeweils Isolierschichten angeordnet sind, dadurch gekennzeichnet, daß eines der innerhalb der Kammer (3) angeordneten Bauteile transparentfarbig ausgebildet ist.

4. Passives elektrooptisches Anzeigeelement nach einem der vorhergehenden Ansprüche, dadurch gekennzeichnet, daß eine Farbschicht auf eines der Bauteile aufgebracht ist.

5. Passives elektrooptisches Anzeigeelement nach Anspruch 4, dadurch gekennzeichnet, daß die Farbschicht aufgedruckt ist.

6. Passives elektrooptisches Anzeigeelement nach Anspruch 4, dadurch gekennzeichnet, daß die Farbschicht eine Farbfolie ist.

7. Passives elektrooptisches Anzeigeelement nach einem der Ansprüche 1 bis 3, dadurch gekennzeichnet, daß eines der Zellengläser aus einem farbigen Werkstoff besteht.

8. Passives elektrooptisches Anzeigelement nach einem der Ansprüche 1 bis 3, dadurch gekennzeichnet, daß eine der Orientierungsschichten (13) aus einem farbigen Werkstoff besteht.

9. Passives elektrooptisches Anzeigeelement nach einem der Ansprüche 1 bis 3, dadurch gekennzeichnet, daß eine der Isolierschichten aus einem farbigen Werkstoff besteht.

10. Passives elektrooptisches Anzeigeelement nach einem der Ansprüche 7, 8 oder 9, dadurch gekennzeichnet, daß durch Mischung des Werkstoffs mit einem Farbstoff das Bauteil bei seiner Herstellung farbig ausgebildet ist.

0038905

1/1

FIG.1

15  15'  15''  5  1

8  10  12  14  3  4

11  9  2

13  7  6

FIG.2  13  5

8  1

10  14

12  4

11  3

9  2

16  16'  16''  6  7

Europäisches
Patentamt

**EUROPÄISCHER RECHERCHENBERICHT**

Nummer der Anmeldung

00389O5

EP 81100683.2

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | |
| | DE - A - 2 226 959 (SIEMENS) <br> + Fig.1, Seite 4, 1.Absatz + <br> -- | 1-3 | | G O2 F 1/133 <br> G O9 F 9/35 |
| | DE - B2 - 2 4O1 974 (MATSUSHITA) <br> + Spalte 1, Zeilen 4-14, 50-58; <br> Fig.1, Spalte 3, Zeilen 8-30+ <br> -- | 1-3,10 | | |
| | DE - A - 2 415 2O2 (INTERNATIONAL) <br> + Fig.2, Seite 9, 3.Absatz; Fig. 4, Seite 12, 2.Absatz + <br> -- | 1-4 | | RECHERCHIERTE SACHGEBIETE (Int. Cl.³) |
| | GB - A - 1 49O 11O (MATSUSHITA) <br> + Fig. 4,5, Seite 2, Zeilen 36- 54, 63-69, 16-20 + <br> ---- | 1-4 | | G O2 F 1/OO <br> G O9 F 9/OO |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 20-07-1981 | BENISCHKA |

EPA form 1503.1   06.78